# EUROPEAN PATENT APPLICATION

(11) **EP 0 945 783 A2**
(43) Date of publication of application: **29.09.1999**
(21) Application number: 99105020.4
(22) Date of filing: 19.03.1999
(51) Int. Cl.: G06F 9/30, G06F 9/302

(54) **Variable length register device**

(30) Priority: 23.03.1998 JP 7393998
(71) Applicant: NEC CORPORATION, Tokyo (JP)
(72) Inventor: Ashihara, Koji, Minato-ku, Tokyo (JP); Uno, Kousuke, Nakahara-ku, Kawasaki-shi, Kanagawa (JP); Shimura, Naoki, Nakahara-ku, Kawasaki-shi, Kanagawa (JP)
(74) Representative: VOSSIUS & PARTNER

(57) **Abstract**

It is an object of the invention to provide a variable length register device which can be used not only for assigning an address of a memory but also as a general register. A memory outputs an instruction to gain access to a variable length register. A decoder decodes the instruction supplied from the memory and composes discriminators for assigning the variable length register and used areas therein. The first selectors read data stored in the used areas, which are assigned in the specified variable length register, in accordance with the discriminators composed in the decoder, and coordinates the areas storing the data therein. An arithmetic logical unit carried out operations based on the data read from the first selectors. The second selector reads the data outputted from the arithmetic logical unit, and stores them in the variable length register coordinating the used areas.

## Description

The invention relates to a register device used in a computer as a temporary memory device, and especially to a variable length register device, a register length and the number of the registers of which are variable.

An example of conventional variable length register devices is disclosed in Japanese patent Kokai 4-76748. This variable length register device is composed of the first selector, which selects lower n bits of the first register of N bits (N>n) and outputs them, the second selector, which selects upper N-n bits of the first register of N bits (N>n) and output them, and an operational circuit, which is supplied with the outputs of the first and second selectors and outputs data of N bits by carrying out an operation of logical OR.

This variable length register device is used in case that a memory can be effectively utilized by changing a bank address of the memory by a software.

However, according to the variable length register device disclosed in Japanese patent Kokai 4-76748, since an used area in the register cannot be dermined in accordance with the length of the data, the use thereof is restricted to assignment of the bank address of the memory and does not attain to a general register.

Moreover, the determination of the register length and the number of the registers have important meanings in the design of the processor architecture. If insufficiency in the registers occurs at the time of a process of a application, the throughput deteriorates. If redundant registers are provided, the cost of the processor increases. In case of application that data of 32 bits is necessary sometimes, but only lower 16 or 8 bits are necessary for the process many times, the number of utilized bits is far smaller than that of the necessary registers, and there arise lots of futility.

Accordingly, it is an object of the invention to provide a variable length register device, which can be utilized not only for assigning addresses in memory but also as a general register.

According to the feature of the invention, an variable length register comprises:
one of more registers, each having a predetermined number of bits,
a memory for storing a predetermined program, and
an instruction decoder, which decodes the predetermined program and outputs instructions to assign numbers of bits to be used in the predetermined number and areas for storing the bits in the one or more registers.

The invention will be explained in more detail conjunction with appended drawings, wherein:
FIG.1 is a block diagram for showing a variable length register device according to the preferred embodiment of the invention,
FIG.2 shows an example of assignment of used areas in a variable length register device shown in FIG. 1, and
FIG.3 concretely explains an operation of a variable length register device shown in FIG. 1.

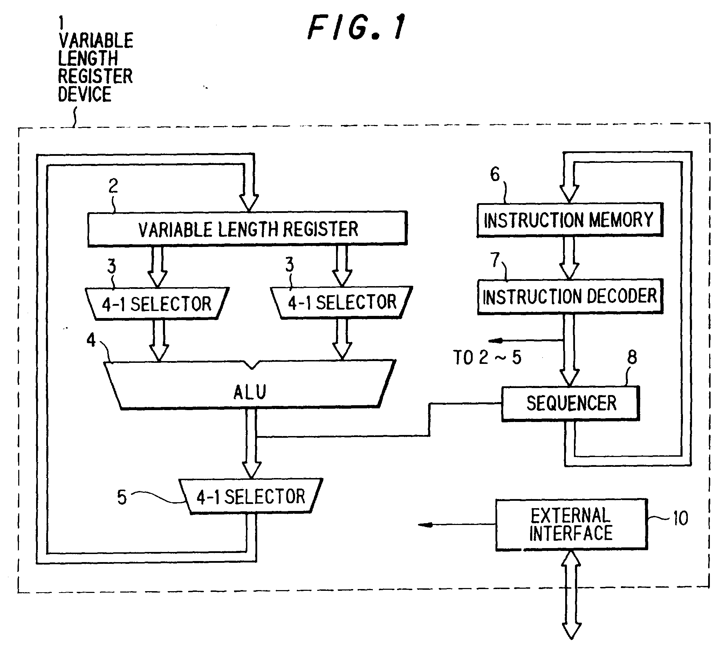

Fig.1 is a block diagram for showing a variable length register device according to a preferred embodiment of the invention.

In the variable length register device 1, a variable length resister 2, 4-1 selectors 3 and an arithmetic logical unit (an ALU, hereinafter) 4 and a 4-1 selector 5 are successively connected in this order to form a loop, and an instruction memory 6, an instruction decoder 7 and a sequencer 8 are successively connected in this order to form another loop. A part of an output of the ALU 4 is supplied to the sequencer 8, and an instruction decoded by the instruction decoder 7 is supplied to the variable length resister 2, the 4-1 selectors 3, the ALU 4 and the 4-1 selector 5. The variable length resister device is connected with an external circuit via an external interface 10 and a control bus 11.

In the aforementioned structure, an outline of the operation will be explained. An instruction to gain access to the variable length register 2 is outputted from the instruction memory 6, and inputted to the instruction decoder 7 to be decoded. As the result, a control signal for specifying the variable length register 2 and assigning an used area therein is generated in the instruction decoder 7, transmitted to the variable length decoder 2, the 4-1 selectors 3, the ALU 4 and the 4-1 selector 5, and inputted to the sequencer 8.

Data in the variable length resister 2 is read on the 4-1 selectors 3 and the used areas therein are coordinated in accordance the instruction supplied from the instruction decoder 7. Then, the data are inputted to the ALU 4 and operated therein. The operated data is read on the 4-1 selector 5 and the used areas therein are coordinated. The data in the 4-1 selector 5 is again written into the variable length register 2. At this time, various flags are transmitted to the sequencer 8, and following instructions are executed.

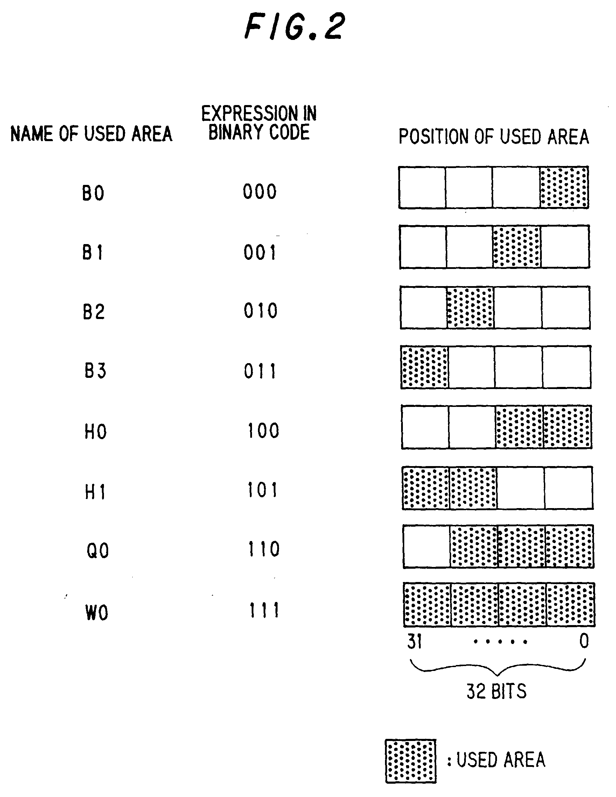

FIG.2 shows an example of assignment of the used areas.

In this example, a register with a length of 32 bits is assigned as variable length registers of 8/16/24/32 bits. In this case, it is sometimes necessary that every 8 bits is provided with a read/write enable terminal in accordance with the structure of a hardware of the register.

In FIG.2, the used area having the name of B0 covers 8 bits corresponding to the 0th to 7th bit, the same having the name of B1 covers 8 bits corresponding to the 8th to 15th bit, the same having the name of B2 covers 8 bits corresponding to the 16th to the 23rd bit, and the same having the name of B3 covers 8 bits corresponding to the 24th to 31st bit. The used area having the name of H0 covers 16 bits corresponding to the 0th to the 15th bit, and the same having the name of H1 covers 16 bits corresponding to the 16th to the 31st bit. The used area having the name of Q0 covers 24 bits corresponding to the 0th to the 23rd bit. The used areas having the name of W0 covers 32 bits corresponding to the 0th to the 31st bit. As written additionally in FIG.2, the name of the used area is expressed by a binary code of 3 bits.

As mentioned in the above, the assignment of the used area in the variable length register 2 is specified in the instruction to gain access to the variable length register 2, and, in such a case, the name of the used area (the binary code, in case of a machine word) should be combined with a operand. A discriminator for specifying a variable length register 2 to be used in the several ones is combined with the discriminator for assigning the used area.

A method for assigning the used area in the variable length register 2, the number of the variable length resisters and the use of the fixed length register jointly with the variable register are suitably selected in consideration of a target of application.

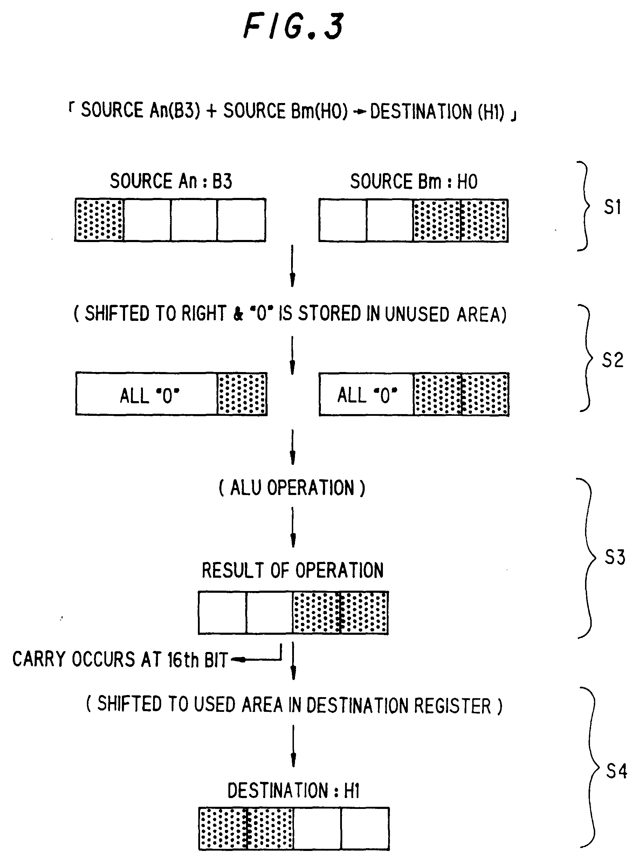

FIG.3 shows the operation of the variable length register device 1 concretely.

An explanation will be given for a case that an operational instruction expressed by "Source An (B3) + Source Bm (H0) → Destination (H1)" is outputted from the instruction memory 6. This instruction means that the data in the n th B3 area in the variable length register 2 of the source A is arithmetically added to the data in the m th H0 area of the variable length register 2 of the source B, and the result obtained is stored in the H1 area in the destination register.

First, the data in the n th B3 area of the variable length register 2 of the source A and the data in the m th H0 area in the variable length register 2 of the source B are respectively read on the 4-1 selectors 3 (Step S1), and the used areas are coordinated. Since the source A assigns the B3 area (8 bits corresponding to the 24th to the 31st bit), the data stored therein is closely shifted to the B0 area (8 bits corresponding to the 0th to the 7th bit) and "0" is stored in the unused area (24 bits corresponding to the 8th to the 31st bit), before the data is inputted to the ALU 4. Moreover, since the source B assigns the H0 area (16 bits corresponding to the 0th to the 15th bit), the data stored therein is not shifted to the right, but "0" is stored in the unused area (16 bits corresponding to the 16th to the 31st bit) (Step S2).

The data, the used areas of which have been coordinated, are inputted to the ALU 4 and arithmetically added together, and various flags generated as the result of the operation are transmitted to the sequencer 8. In this example, a carry occurs at the position of the 16th bit (Step 3).

Next, the arithmetically added data is read on the 4-1 selector 5, and the used area is coordinated. That is to say, since the destination register assigns the H1 area (16 bits corresponding to the 16th to the 31st bit), the data is shifted to the H1 area (16 bits corresponding to the 16th to the 31st bit) from the H0 area (16 bits corresponding to the 0th to the 15th bit). Finally, the data, the used area of which has been coordinated, is stored in the destination register. It is enough to renew the data stored in the H1 area (Step 4).

According to the variable length register device 1 having a structure mentioned in the above, the numbers of the registers in the variable length register 2 can be optimized, even in case that the process becomes redundant by adopting the fixed length registers in some characteristic of application.

For example, in case that a data bus of 32 its is used, several fixed length registers are provided in a ordinary processor. However, there arises a circumstance that it is sufficient to process only a part of 32 bits in some applications. That is to say, in case that lower 8 bits are truly necessary, upper 24 bits are unnecessary and redundant.

In order to store four data of 32 bits, in each of which only lower 8 bits are truly necessary, it is necessary to provide four fixed length resisters of 32 bits (32 bits × 4 = 128 bits), and the resister device becomes redundant. However, if a variable length register of 32 bits, which is accessible to the data of 8 bits, is used, the four data, each being composed of 8 bits, can be stored in a single variable length register, and the number of the registers can be optimized.

As mentioned in the above, since the lengths and the number of the registers are variable, a throughput can be improved.

For example, when the four data, in each of which only lower 8 bits are truly necessary, are read, the data must be read four times in case that the fixed length registers of 32 bits are used, and shift/mask is necessary in accordance with the structure of a hardware. On the other hand, in case that the four data, each being composed of 8 bits, are previously stored in the variable length register of 32 bits, read can be completed at a time, so that the times of accesses can be reduced and the throughput can be improved.

For example, in case of the 32 bits fixed length registers when upper 16 bits of 32 hits and lower 16 bits of 32 bits are separately operated and the results are separately stored, it is necessary to carry out excessive operations, such as sift, mask, logical operation and etc., after the respective operations in order to store the results of the operations. On the other hand, in case of the 32 bits variable length registers, since the positions of the data to be stored can be directly assigned after the respective operations are completed, the excessive operations can be reduced and the throughput can be improved.

Moreover, the aforementioned advantage of the variable length register can be exhibited in case that an external memory is jointly used.

For example, in case that only one or more 32 bit fixed length registers are built in, when a 32 bit external memory is provided, the data can be transmitted to the internal register via a 32 bit bus and the four data, each being composed of 8 bits, stored in the 32 bit external memory are read, it is necessary to adopt a method that four data, each being composed of 8 bits, are respectively stored in that lower 8 nits of four words in the 32 bit external memory, and these data are taken into the lower 8 bits of four words of the 32 bit fixed length registers through accesses of four times; or another method that the four data, each being composed of 8 bits, are stored in one word of the 32 bit external memory, and the data are taken into one word of the 32 bit fixed length register at a time and read four times, where sift, mask and etc. are necessary in accordance with a structure of a hardware.

However, in case that the 32 bit variable length register is built in, the four data, each being composed of 8 bits, are stored into one word of the 32 bit external memory, and the data are taken into the 32 bit variable length register at a time, so that excessive operations can be reduced and the throughput can be improved.

Moreover, according to the variable length register device, since the length of the register and the number of the registers are variable, consumed electrical power can be reduced.

For example, in case that the 32 bit variable length register is used and only lower 8 bits of 32 bits are necessary for the process, since it is necessary to gain access to lower 8 bits and unnecessary to gain access to upper 24 bits, the number of accesses and excessive operations can be reduced and consumed electrical power can be cut down.

Other than the method mentioned in the above, in which a register with a length of 32 bits is assigned as a variable length register of 8, 16, 24 or 32 bits, a following method can be adopted. That is to say, fixed length registers of 8, 16, 24 and 32 bits are separately provided and assigned by means of a compiler at need so that the group of these fixed length registers apparently operate as if a variable length registers. According to the later method, although the control of a hardware is simplified and an operation speed is improved, since it is necessary to limit an application and determine the optimum combinations of the provided registers in order to avoid a failure in the assignment of the registers, there arises a disadvantage that it is difficult to keep a property of a genera register.

As mentioned in the above, according to the invention, since the length of the register and the number of the registers are variable, plural information can be stored in a single register, the times of accesses can be reduced, and, as the result, the throughput is improved and consumed electrical power is cut down.

## Claims

1. A variable length register device, comprising:
one of more registers, each having a predetermined number of bits,
a memory for storing a predetermined program, and
an instruction decoder, which decodes said predetermined program and outputs instructions to assign numbers of bits to be used in said predetermined number and areas for storing said bits in said one or more registers.

2. A variable length register device, comprising:
a memory for outputting instructions to gain access to one or more variable length registers,
a decoders, which decodes said instructions and composes first discriminators for specifying said one or more variable length registers and second discriminators for assigning used areas in said specified one or more variable length registers,
first selectors, which read data stored in said assigned areas in said specified one or more variable length registers in accordance with said first and second discriminators and coordinate areas storing said read data therein,
an arithmetic logical unit for carrying out a operation based on said data supplied from said first selectors, and
a second selector, which reads a result of said operation, coordinates an area storing said results of said operation and stores them in a destination register.

3. A variable length register device according to claim 2, wherein:
said decoder composes control signals to be supplied to said first and second selectors and said arithmetic logical unit, and respectively transmits them to said first and second selectors and said arithmetic logical unit.

4. A variable length register according to claim 2 or 3, wherein:
said decoder is connected with a sequencer for controlling a sequence between said decoder and said memory, and
said arithmetic logical unit composes various flags and transmits them to said sequencer.
